# EUROPEAN PATENT APPLICATION

(11) **EP 4 708 069 A1**
(43) Date of publication of application: **11.03.2026**
(21) Application number: 24852436.5
(22) Date of filing: 01.08.2024
(51) Int. Cl.: G06F 16/25, G06F 16/215, G06F 16/21, G06F 16/22, G06Q 50/04, H01M 4/04, H01M 10/04

(54) **METHOD FOR STORING ROLL MAP AND METHOD FOR EXTRACTING ROLL MAP**

(30) Priority: 04.08.2023 KR 20230102249
(71) Applicant: LG Energy Solution, Ltd., Seoul 07335 (KR)
(72) Inventor: JUNG, Jung Youn, Daejeon 34122 (KR); SIM, Min Kyu, Daejeon 34122 (KR); PARK, Wi Dae, Daejeon 34122 (KR); KIM, Seol Hee, Daejeon 34122 (KR); BAE, In Bong, Daejeon 34122 (KR); KIM, Min Su, Daejeon 34122 (KR); PARK, Jong Seok, Daejeon 34122 (KR)
(74) Representative: BCKIP Part mbB
(86) International application number: PCT/KR2024/095948
(87) International publication number: WO 2025/034083

(57) **Abstract**

Example embodiments of the present technology provide a roll map storing method. The roll map storing method includes transmitting compressed measurement data, which is generated by processing measurement data collected by measuring an electrode sheet, to a server, modifying the compressed measurement data to generate modified measurement data, and storing the modified data, in which the compressed measurement data includes a first measurement start coordinate, a first measurement end coordinate, a first representative value of a first section defined by the first measurement start coordinate and the first measurement end coordinate, a second measurement start coordinate, a second measurement end coordinate, and a second representative value of a second section defined by the second measurement start coordinate and the second measurement end coordinate, and the first measurement start coordinate and the second measurement start coordinate are the same.

## Description

### [Technical Field]

The present invention relates to a roll map storing method and a roll map extracting method. The present application claims the benefit of priority based on Korean Patent Application No. 10-2023-0102249, filed on August 4, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a secondary battery manufacturing system and method capable of retrieving history data of the manufacture of electrodes.

### [Technical Solution]

Example embodiments of the present invention provide a roll map storing method. The roll map storing method includes transmitting compressed measurement data, which is generated by processing measurement data collected by measuring an electrode sheet, to a server, modifying the compressed measurement data to generate modified measurement data, and storing the modified data, in which the compressed measurement data includes a first measurement start coordinate, a first measurement end coordinate, a first representative value of a first section defined by the first measurement start coordinate and the first measurement end coordinate, a second measurement start coordinate, a second measurement end coordinate, and a second representative value of a second section defined by the second measurement start coordinate and the second measurement end coordinate, and the first measurement start coordinate and the second measurement start coordinate are the same.

The modifying of the compressed measurement data may be performed by the server.

The modifying of the compressed measurement data may include replacing the first measurement end coordinate with the second measurement end coordinate.

The modifying of the compressed measurement data may include replacing the first representative value with the second representative value.

Example embodiments provide a roll map extracting method. The roll map extracting method includes joining coordinate-related cell identifier (ID) data and compressed measurement data to extract joined data, in which the compressed measurement data includes measurement start coordinates, measurement end coordinates, and representative values of measurement of parts of an electrode sheet defined by the measurement start coordinates and the measurement end coordinates, the coordinate-related cell ID data includes cell IDs and cell ID coordinates, which are coordinates of electrodes matching the cell IDs, the electrodes are formed by cutting the electrode sheet, and the coordinate-related cell ID data and the compressed measurement data are joined by an outer join.

The outer join may be a left join based on the coordinate-related cell ID data.

The outer join may be a right join.

The compressed measurement data may include an omitted part, and the measurement start coordinate and the measurement end coordinate of the omitted part of the compressed measurement data may be null in the joined data.

The roll map extracting method may further include modifying the joined data to generate modified data.

The modifying of the joined data may include comparing the measurement start coordinates and the measurement end coordinates, which are not null, with the cell ID coordinates of the coordinate-related cell ID data.

The modifying of the joined data to generate the modified data may include detecting a first measurement start coordinate and a first measurement end coordinate that define a first section including a first cell ID coordinate corresponding to an omitted part of the compressed measurement data.

The first cell ID coordinate may be included in the cell ID coordinates, the first measurement start coordinate may be included in the measurement start coordinates, and the first measurement end coordinate may be included in the measurement end coordinates.

The modifying of the joined data to generate the modified data may include matching the first measurement start coordinate and the first measurement end coordinate to the first cell ID coordinate.

A first representative value of the first section may match the first cell ID coordinate, and the first representative value may be included in the representative values of the compressed measurement data.

### [Advantageous Effects]

According to example embodiments of the present invention, the traceability between a roll map produced in an electrode process and an intermediate product such as a mono cell can be improved. Accordingly, the reliability of the manufacture of a secondary battery may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 is a flowchart of a data storing method according to example embodiments.
FIG. 3 is a flowchart of a data joining method according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

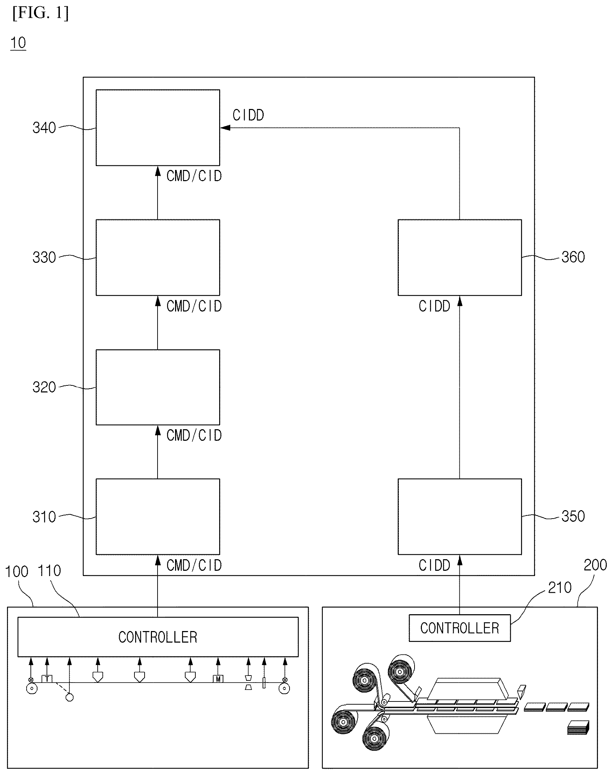

FIG. 1 illustrates a secondary battery manufacturing system 10 according to example embodiments.

Referring to FIG. 1, the secondary battery manufacturing system 10 may include an electrode process equipment 100, an assembly process equipment 200, and a roll map generator 300.

The electrode process equipment 100 may be configured to perform a secondary battery manufacturing process. In the electrode process equipment 100, an electrode process may be performed on an electrode sheet unwound from an electrode roll by an unwinder, and the electrode sheet may be wound back into an electrode roll by a rewinder. Accordingly, the electrode process may be a roll-to-roll process.

The electrode process equipment 100 may include a first rotary encoder configured to detect an amount of an input electrode sheet based on an amount of rotation of an unwinder, and a second rotary encoder configured to detect an amount of the exhausted electrode sheet based on an amount of rotation of a rewinder. The first rotary encoder may generate an input amount signal and may be configured to transmit the input amount signal to a controller 110. The first rotary encoder may generate an exhaustion amount signal and be configured to transmit the exhaustion amount signal to the controller 110.

The electrode sheet may be processed by a processing mechanism. For example, the processing mechanism may include a coater, and the electrode sheet may be coated with an electrode slurry. As another example, the processing mechanism may include a pressing roll, and the roll pressing process may be performed on the electrode sheet coated with the electrode slurry. As another example, the processing mechanism may include a splicing die and a scrap port, and a part of the electrode sheet may be scrapped. As another example, the processing mechanism may include a slitting knife, and the electrode sheet may be divided into a plurality of electrode sheets.

The coating process is a process of applying a coating material such as the electrode slurry to the electrode sheet. The electrode slurry may include an electrode active material, a conductive agent, a binder, and a solvent. The electrode slurry may be provided by dissolving the electrode active material, the conductive additive, the binder, etc. in the solvent. In the coating process, a boundary of a coated lane of the electrode sheet may further be coated with an insulating layer. Here, the coated lane is a part of the electrode sheet coated with the electrode slurry.

The roll pressing process is a process of passing the electrode sheet coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet ES having the broad width may be cut according to the specifications of a battery cell.

The electrode process equipment 100 may include the controller 110 configured to control the unwinder, the rewinder, and the processing mechanism. The controller 110 and a controller 210, which will be described below, may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The controllers 110 and 210 may include a power supply, a CPU, an input interface, an output interface, a communication interface, and memory devices. For an operation of the controller 210, power may be supplied to other elements of the controllers 110 and 210, such as the CPU, the input interface, the output interface, the communication interface, and the memory devices. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to control communication between modules that implement logic and convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through the output module. The communication interface may be configured to transmit and receive data between the controllers 110 and 210 and servers 310 and 350.

However, embodiments are not limited thereto, and the controllers 110 and 210 may each include one of a simple controller, a complex processor such as a microprocessor, a CPU or a GPU, a processor configured by software, dedicated hardware, and firmware. The controllers 110 and 210 may be implemented, for example, by a general-purpose computer or application-specific hardware such as a digital signal process (DSP), a field-programmable gate array (FPGA) or an application-specific integrated circuit (ASIC).

The controller 110 may be configured to receive the input amount signal and the exhaustion amount signal from the rotary encoders. Accordingly, the controller 110 may be configured to determine coordinates of a part of the electrode sheet to be unwound by the unwinder and a part of the electrode sheet to be wound by the rewinder. The controller 110 may be configured to determine coordinates of an event occurring in the electrode sheet based on an offset length.

Here, the offset length may be a length of the electrode sheet between one of the processing mechanism, and a measuring device and an inspector, which will be described below, and the rewinder or between one of the processing mechanism, the measuring device and the inspector, and the unwinder.

The electrode process equipment 100 may further include a measuring device and an inspector. The measuring device and the inspector may include a sensing part and a processor. The sensing part may be configured to generate a measurement signal or an inspection signal. The sensing part may include a time delay and integration (TDI) camera, a component metal oxide semiconductor (CMOS) image sensor, and a time of flight (TOF) sensor. The sensing part may include an emitter and a receiver that are configured to perform measurement using nondestructive signals such as ultrasound waves, microwaves, terahertz waves, or infrared rays. The sensing part may include analog and/or digital sensors, such as a color sensor, a biosensor, a chemical sensor, a composition sensor, a current and/or power meter, an air quality sensor, a gas sensor, a hall effect sensor, a brightness level sensor, and an optical sensor. The sensing part may include a pressure sensor, a temperature sensor, an ultrasonic sensor, a proximity sensor, a door state sensor, a motion tracking sensor, a humidity sensor, a visible light and infrared sensor, a camera, etc. In some cases, the inspector may include only a sensing part.

The measuring device may be configured to collect measurement data, and the inspector may be configured to collect inspection data. Raw measurement data may include a profile of a physical quantity based on a scanning result. For example, the measurement data may include thickness data and loading amount data of a coating material on the electrode sheet. As a non-limiting example, the measuring device may include a web gauge and a thickness meter that are manufactured by Thermofisher Scientific.

The inspection data may include data of a judgement of the quality of a part of the electrode sheet and a process event. For example, the inspection data may include data about the appearance of the electrode sheet collected by an image-based inspection device such as a vision machine, size data such as a width of an insulating material on the coating material and an overlapping width between the coating material and the insulating material, mismatching data between coated lanes on an upper surface of the electrode sheet and coated lanes on a lower surface of the electrode sheet, data about disconnections and joints on the electrode sheet, data about a part of the electrode sheet on which sampling inspection is performed, data about a part of the electrode sheet ES to be scrapped, data about a scraped part of the electrode sheet ES, data about whether the coating material and the insulating material on the electrode sheet ES are defective or not, data about datum points indicating a position of the electrode sheet, and defect data such as a pinhole defect, a crater defect, a line defect, a crack defect, a side ring defect, an island defect, a folded defect, a wrinkle defect, a pit defect, and a scratch defect. The datum points may be formed on the electrode sheet at certain intervals, and other elements on the electrode sheet may be located based on the datum points. The inspector may be a color sensor, a joint sensor, a datum point sensor, or a vision machine.

The measurement data and the inspection data described above may be time series data. The measurement data and the inspection data may be temporally ordered. The measurement data and the inspection data may be indexed by time. The measurement data may include measured values and a time value (or time values) matching the measured values. The test data may include an inspection value and a time value (or time values) matching the inspection value. That is, the measurement data and the inspection data may be stored based on points in times when measurement and inspection are performed, and the measured values of the measurement data and the inspection values of the inspection data may be related to time. The time values of the measurement data and the inspection data may be, for example, in the form of timestamp but are not limited thereto.

For example, the measurement data (e.g., loading amount data of the electrode sheet or thickness data of the electrode sheet) may include a series of measured values and time values related to a series of loading amounts. The measured values and the time values may be matched in a one-to-one manner but are not limited thereto. The measured values may be matched to a single timestamp, which indicates a starting point of the measurement, in a many-to-one manner. As another example, the defect data may include a value indicating a defect and a time value related to the value indicating the defect. Here, the value indicating defect includes at least one of information as to whether there is a defect or information about the type of the defect.

The inspection data may be matched with coordinates by the controller 110. More specifically, the controller 110 may be configured to receive the inspection data from the inspector and generate coordinate-related inspection data CID by matching the inspection data with the coordinates. The coordinate-related inspection data CID may include a judgement value and a coordinate matching the judgement value. The coordinate may be a single coordinate or may include a start coordinate of inspection and an end coordinate of inspection to indicate a section of the electrode sheet corresponding to the judgement value.

The processor of the measuring device may be configured to receive coordinates from the controller 110 and connect the coordinates with the measurement data to generate coordinate-related measurement data. The coordinate-related measurement data may include a measurement start coordinate and a measurement end coordinate that indicate a section of the electrode sheet from which the measurement data is collected, and raw measurement data matching the measurement start coordinate and the measurement end coordinate. That is, the raw measurement data may be collected from the section of the electrode sheet defined by the measurement start coordinate and the measurement end coordinate. The processor may further be configured to generate compressed measurement data CMD that includes a representative value (e.g., an average) of the raw measurement data and the measurement start coordinate and the measurement end coordinate end coordinate that match the representative value. The representative value of the measurement data may be calculated from the raw measurement data collected from the section of the electrode sheet defined by the measurement start coordinate and the measurement end coordinate. The compressed measurement data CMD and the coordinate-related measurement data may be generated by the controller 110 instead of the processor.

The assembly process equipment 200 may be configured to perform an assembly process. The assembly process equipment 200 may be configured to perform, for example, a lamination and stacking (hereinafter, referred to as "L&S") process. Mono cells and half cells may be provided as a result of a lamination process. A mono cell may include a positive electrode, a negative electrode, and separators. A half-cell may include a negative electrode and a separator. In a stacking process, the mono cells and the half-cells may be stacked in a vertical direction to provide an electrode assembly.

The assembly process equipment 200 may be configured to further perform a notching process. In the notching process, tabs may be formed on the electrode sheet, and a V-shaped groove may be formed to cut the electrode sheet as needed. In the notching process, positive electrode tabs and negative electrode tabs may be formed. In the notching process, cell identifiers (IDs) may be formed on the negative electrode tabs. The cell IDs may be formed by a method such as laser printing or ink printing. Accordingly, each of the negative electrode tabs may be assigned a cell ID. Unlike the negative electrode tabs, the positive electrode tabs may not be assigned cell IDs to prevent defects.

The assembly process equipment 200 may include a positive electrode unwinder, a negative electrode unwinder, separator unwinders, electrode cutters, a separator cutter, a positive electrode rotary encoder, a negative electrode rotary encoder, joint detection sensors, a cell ID reader 131, and the controller 210.

The unwinders may be configured to put roll type materials to a secondary battery manufacturing system. More specifically, the positive electrode unwinder may be configured to unwind a positive electrode sheet from a positive electrode roll, the negative electrode unwinder may be configured to unwind a negative electrode sheet from a negative electrode roll, and the separator unwinders may be configured to unwind separator sheets from separator rolls.

The cell ID of each of the negative electrode tabs may be configured to indicate an order of each of the negative electrode tabs on the negative electrode sheet. The cell ID of each of the negative electrode tabs may indicate the order of the negative electrode tabs. The cell ID may include, for example, a barcode. The cell ID may include, for example, a 2-dimentional (2D) barcode.

However, the present invention is not limited thereto, and the cell ID may include a symbol indicating the order of the negative electrode tabs. The symbol of the cell ID may include Arabic numerals but is not limited thereto. The symbol of the cell ID may include arbitrary characters providing information about the order of the negative electrode tabs.

The positive electrode cutter may be configured to cut the positive electrode sheet. A plurality of positive electrodes may be provided by cutting the positive electrode sheet. The negative electrode cutter may be configured to cut the negative electrode sheet. A plurality of negative electrodes may be provided by cutting the negative electrode sheet.

As will be described below, the controller 210 may control operations of the positive electrode cutter and the negative electrode cutter and thus be configured to count the number of cuts of the positive electrode sheet made by the positive electrode cutter and the number of cuts of the negative electrode sheet made by the negative electrode cutter. For example, the controller 210 may be configured to receive a first cut count signal from the positive electrode cutter and a second cut count signal from the negative electrode cutter.

The separator cutter may be configured to cut the separator sheets. A stacked structure of the separator sheets, the positive electrodes, and the negative electrodes may be pressed by a nip roll (not shown) before cutting of the separator sheets. The separator sheets may be cut to provide a mono cell including positive electrodes, negative electrodes, and separators.

The rotary encoders may be configured to detect amounts of rotation of the positive electrode unwinder and the negative electrode unwinder. The rotary encoders may be configured to detect an amount of the positive electrode sheet unwound from the positive electrode roll by the positive electrode unwinder and an amount of the negative electrode unwound from the negative electrode roll by the negative electrode unwinder. Accordingly, the rotary encoders may be configured to generate a first input amount signal indicating a length of the positive electrode sheet unwound by the positive electrode unwinder (i.e., an amount of the input positive electrode sheet) and a second input amount signal indicating a length of the negative electrode sheet unwound by the negative electrode unwinder (i.e., an amount of the input negative electrode sheet). The rotary encoders may be configured to transmit the first and second input signals to a controller.

The joint detection sensors may be configured to detect joints of the positive electrode sheet and the negative electrode sheet. Here, when the positive electrode roll and the negative electrode roll are exchanged (i.e., when a subsequent positive electrode roll and a subsequent negative electrode roll are loaded on the positive electrode unwinder and the negative electrode unwinder), the positive electrode sheet and the negative electrode sheet may include joints.

The seam detection sensors may be, for example, color sensors but are not limited thereto. The joint detection sensors may be configured to generate joint detection signals. The joint detection signals may be transmitted to the controller.

The cell ID reader may be configured to detect a cell ID. The cell ID reader may be configured to read an order indicated by the cell ID. The cell ID reader may be, for example, a bar code reader (BCR) but is not limited thereto. The electrode ID reader may be an optical character reader (OCR). The cell ID reader may be configured to generate a cell ID detection signal based on the detection of the cell ID. The cell ID reader may be configured to transmit the cell ID detection signal to the controller 210.

The controller 210 may be configured to control components of the assembly process equipment 200, such as the unwinders, the positive electrode cutter, the negative electrode cutter, and the separator cutter. The controller 210 may be configured to determine a coordinate of a part of the positive electrode sheet, which is unwound by the unwinder, on the positive electrode sheet, based on an amount of input calculated based on a count of cuts made by the positive electrode cutter or an amount of the input positive electrode sheet detected by the rotary encoder. The controller 210 may be configured to determine a coordinate of a part of the negative electrode sheet, which is unwound by the unwinder, on the negative electrode sheet, based on an amount of input calculated based on a count of cuts made by the negative electrode cutter or an amount of the input negative electrode sheet detected by the rotary encoder.

The controller 210 may be configured to determine a coordinate of an event occurring in the positive electrode sheet (or the plurality of positive electrodes) based on the amount of the positive electrode sheet and an offset length. Here, the offset length is a distance between a part of the positive electrode sheet on which an unwinder and a process event (e.g., inspection by the inspector and processing by the processing mechanism) occurs.

The controller 210 may be configured to determine a coordinate of an event, e.g., detection of a cell ID, occurring on the negative electrode sheet (or, the plurality of negative electrodes) based on the amount of the input negative electrode sheet and an offset length. Here, the offset length is a distance between an unwinder and a part of the negative electrode sheet on which a process event occurs.

The controller 210 may be configured to collect coordinate-related cell ID data CIDD based on the cell ID detection signal, the amount of the input positive electrode sheet, and the amount of the input negative electrode sheet. The controller 210 may be configured to match a coordinate of a negative electrode detected by the cell ID reader with the cell ID detection signal to collect the coordinate-related cell ID data CIDD. The controller 210 may be configured to match a coordinate of a positive electrode coupled to the negative electrode detected by the cell ID reader with the cell ID detection signal to collect the coordinate-related cell ID data CIDD. Accordingly, the coordinate-related cell ID data CIDD may include cell IDs, coordinates of a plurality of negative electrodes matching the cell IDs, and coordinates of a plurality of positive electrodes matching the cell IDs.

For matching between a cell ID and each of a coordinate of a positive electrode sheet and a coordinate of a negative electrode sheet, a lot number of a positive electrode roll from which the positive electrode sheet is unwound and a lot number of a negative electrode roll from which the negative electrode sheet is unwound should be determined. According to example embodiments, the controller 210 may update each of the lot numbers of the positive electrode roll and the negative electrode roll based on a joint detection signal of each of the positive electrode sheet and the negative electrode sheet. Accordingly, the coordinate of the negative electrode sheet and the coordinate of the positive electrode sheet may be reset based on the joint detection signal. An offset length of the joint detection sensors may be used to update the lot numbers and reset the coordinate of the negative electrode sheet and the coordinate of the positive electrode sheet. Here, the offset length may be a length of the positive or negative electrode sheet between the unwinder and the joint detection sensor.

More specifically, when a new positive or negative electrode roll is loaded on the unwinder, the new positive or negative electrode roll should be connected to a remaining positive or negative electrode sheet using joints thereof. For example, it may be determined that a part of a positive electrode sheet following a joint of a positive electrode sheet sensed first after a positive electrode roll of a new lot is loaded on the unwinder is unwound from the loaded positive electrode roll. Similarly, it may be determined that a part of a negative electrode sheet following a joint of a negative electrode sheet sensed first after a negative electrode roll of a new lot is loaded on the unwinder is unwound from the loaded negative electrode roll.

The roll map generator 300 may include servers 310, 320, 330, 340, 350 and 360. The roll map generator 300 may be configured to generate a roll map based on data (e.g., the coordinate-related inspection data CID, the compressed measurement data CMD, and the coordinate-related cell ID data CIDD collected or generated by the electrode process equipment 100 and the assembly process equipment 200.

The server 310 may be configured to relay communication between the controller 110 and the server 320. The server 310 may be a communication server. A language and protocol of the server 320 may be different from a language and protocol of the controller 110. For example, the language of the server 320 may be SQL, and the language of the controller 110 may be a ladder diagram. In addition, the server 310 may be configured to convert data, e.g., the coordinate-related cell ID data CIDD, collected by the controller 110 into the language of the server 320 and record the converted data in a database of the server 320. Accordingly, the coordinate-related inspection data CID and the compressed measurement data CMD may be recorded in the database of the server 320.

As a non-limiting example, the server 320 may be a manufacturing execution system (MES). The server 320 may be configured to perform inputting, processing, outputting, and communication of data necessary to perform an electrode manufacturing process, including the coating process, the roll pressing process, and the slitting process.

The server 320 may be configured to generate roll maps of an electrode process. Here, the roll map may represent a process event of a positive electrode sheet and a negative electrode sheet based on coordinates indicating positions on the positive electrode sheet and the negative electrode sheet. As described above, a a secondary battery manufacturing process may be performed on the positive electrode sheet and the negative electrode sheet.

The roll map may include event data indicating events of a roll-to-roll process performed on electrode sheets. Generally, the event data is generated according to the progress of a process and thus is time series data. Accordingly, the data of the process events may include values indicating the events and time values matching the values. The time series data may be temporally ordered. Temporal ordering is a main feature of time series data and should be understand as organizing events in an order in which they occur and arrive to be processed. That is, the time series data may be stored based on a point in time when an event occurs (i.e., when inspection and measurement are performed or when an action of a process is performed), and the event may be matched to time values.

The roll map may indicate a history of processes performed on the positive electrode sheet and the negative electrode sheet and data related to coordinates. Accordingly, the roll map enables feedback, feedforward, and tracking of a secondary battery manufacturing process.

The manufacture of a secondary battery involves a series of different processes, and a leading process affects the following process. Feed forward should be hereinafter understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece is an article provided as a result of each process, e.g., a a positive electrode sheet and a negative electrode sheet on which the coating process, the roll press process, and the slitting process are performed. The intermediate product may be cut separators, electrodes, or an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on workpieces, components, intermediate products, and products of the real world. In the roll map, time series data such as measurement data may be related to coordinate data based on the amount of movement (i.e., the amount of input or the amount of exhaustion) of the positive electrode sheet and the negative electrode sheet. The roll map may allow the time series data to be connected with coordinate data including coordinates of the positions on the workpieces, the components, the intermediate products, and the products of the real world. Accordingly, the generation of the roll map and feedforward based on the roll map may improve the efficiency of production and quality by digitizing and objectifying aspects of a process that depend on an operator's discretion.

Roll maps may be generated in units of lots. A lot is a production unit of the roll-to-roll process, and electrode rolls loaded on the unwinders are examples of the lot. Accordingly, the server 320 may be configured to store a roll map of an electrode roll.

The server 330 may be configured to store and process inspection data of the electrode sheet. The server 330 may manage the quality of processing the electrode sheet by continuously monitoring the processing of the electrode sheet based on the inspection data. According to example embodiments, the server 330 may be a statical process controller (SPC). The server 330 may collect and analyze manufacturing data in almost real time to identify problematic conditions in a timely manner and provide a notification to an operator before potential problems occur.

The server 340 may be configured to store data of the servers 320 and 330. The server 340 may be configured to store the coordinate-related inspection data CID and the compressed measurement data CMD. The server 320 and the server 330 may be insufficient to store the coordinate-related inspection data CID and the compressed measurement data CMD for a long time when the server 320 is an MES and the server 330 is an SPC. The server 340 may be, for example, a data warehouse, and store the coordinate-related inspection data CID and the compressed measurement data CMD for a long time based on a quality guarantee period of a product or the like.

The server 350 may be configured to relay communication between the controller 210 and the server 360. The server 350 may be a communication server. A language and protocol of the server 360 may be different from a language and protocol of the controller 210. For example, the language of the server 360 may be SQL, and the language of the controller 210 may be a ladder diagram. In addition, the server 350 may be configured to convert data, e.g., the coordinate-related cell ID data CIDD, collected by the controller 210 into the language of the server 360 and record the converted data in a database of the server 360.

The server 360 may be configured to store the coordinate-related cell ID data CIDD. The server 360 may be configured to process the coordinate-related cell ID data CIDD. The server 360 may be configured to transmit the coordinate-related cell ID data CIDD to the server 340. The server 340 may store the coordinate-related cell ID data CIDD for a long time based on a quality assurance period of a product or the like. Accordingly, a manufacturing process of the product can be tracked according to a life cycle of the product.

Furthermore, as described below, roll maps may be cumulatively generated for workpieces, intermediate products, and products of unit processes to track process history of products (e.g., battery cells, battery modules, or battery packs) on the market. Mono cells include a cell ID formed on negative electrode tabs, and the server 360 may store lot numbers and coordinates of positive electrodes and negative electrodes included in the mono cells matching the cell ID. In other words, positive electrodes and negative electrodes included in a real battery cell may be connected with the roll map according to the cell ID. Accordingly, when an event such as a quality issue occurs in already shipped mono cells (or a battery cell including the mono cells), the history of collective data of the manufacture of the mono cells may be retrieved based on the cell ID.

That is, the server 340 may provide matching between data of the roll map of the electrode process (i.e., the compressed measurement data CMD and the coordinate-related inspection data CID) and the coordinate-related cell ID data CID. For matching between the data of the roll map of the electrode process and the coordinate-related cell ID data CID, the server 340 may be configured to store, process, modulate, and transmit the data of the roll map of the electrode process.

The servers 310, 320, 330, 340, 350 and 360 may be implemented by hardware, firmware, software, or a combination thereof. For example, the servers 310, 320, 330, 340, 350 and 360 may include computing devices such as workstation computers, desktop computers, laptop computers, and tablet computers. The servers 310, 320, 330, 340, 350 and 360 may include a simple controller, a complex processor such as a microprocessor, a CPU, or a GPU, a processor configured by software, dedicated hardware, or firmware. The servers 310, 320, 330, 340, 350 and 360 may be implemented, for example, by a general-purpose computer or application-specific hardware such as a digital signal processor (DSP), a field programmable gate array (FPGA), or an application specific integrated circuit (ASIC).

The servers 310, 320, 330, 340, 350 and 360 may include a physical server or a cloud server. The servers 310, 320, 330, 340, 350 and 360 may provide an operator with data and analysis results through various frameworks. A framework may include a protocol that supports data transmission so that a client device may visualize data through a user interface and provide updated visualization when new data is calculated by the servers 310 and 320. The protocol supporting data transmission may include HTML, JavaScript, and/or JSON.

The servers 310, 320, 330, 340, 350 and 360 may include various application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

According to some embodiments, the servers 310, 320, 330, 340, 350 and 360 may be operated by instructions stored in a machine-readable medium that may be read and executed by one or more processors. Here, the machine-readable medium may include an arbitrary mechanism for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The servers 310, 320, 330, 340, 350 and 360 may include firmware, software, routines, and instructions for performing the above-described operation, or a process described below. For example, the servers 310, 320, 330, 340, 350 and 360 may be instantiated in a memory.

However, the instantiation of the servers 310, 320, 330, 340, 350 and 360 in the memory is only an example provided for convenience of description, and the servers 310, 320, 330, 340, 350 and 360 may be operated by a computing device, distributed computing devices, a processor, or other types of devices for execution of firmware, software, routines, and instructions.

The secondary battery manufacturing system 10 may implement a plug-in architecture with an API for obtaining data to provide a plug-and-play connection among a processing mechanism, an inspection device, and a measuring device. Accordingly, resources in a certain process step and a specific site can be easily transferred to a different process and a different site or new resources can be easily introduced into each process step and each site.

A data network between the components of the secondary battery manufacturing system 10 may include various types of communication channels including unidirectional and bidirectional wired and wireless communications. For example, the data network may include an industrial protocol network such as OPC, Modbus, or ProfiNet. The communication channel may be dedicated conduit communication such as universal serial bus (USB), IEEE 802 (Ethernet), IEEE 1394 (FireWire), or other high-speed data communication standards.

### (Second Embodiment: Method)

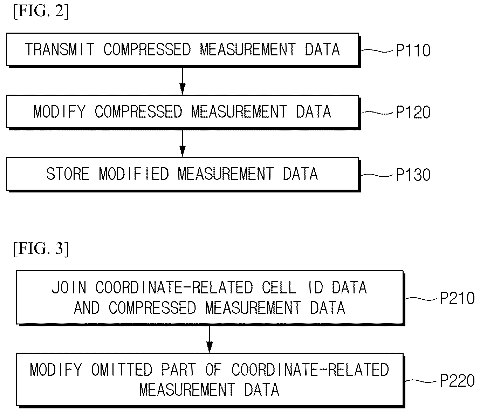

FIG. 2 is a flowchart of a data storing method according to example embodiments.

Referring to FIGS. 1 and 2, in P110, compressed measurement data CMD may be transmitted. The compressed measurement data CMD may be transmitted to the server 340 from the server 330.

Table 1 below shows an example of the compressed measurement data CMD. In Table 1, the compressed measurement data CMD is displayed, e.g., in the form of a table and the technical idea of the present invention should not be understood as being limited thereby in any sense. The compressed measurement data CMD may be transmitted and stored in, for example, a JSON format.

**[Table 1]**

| | Measurement start coordinate | Measurement end coordinate | Representative value |
|---|---|---|---|
| First section | 3.4 | 10.1 | X |
| | 3.4 | 10.1 | |
| | 3.4 | 10.1 | |
| | 3.4 | 10.1 | |
| | 3.4 | 10.1 | |
| Second section | 3.4 | 15.5 | Y |
| | 3.4 | 15.5 | |
| | 3.4 | 15.5 | |
| | 3.4 | 15.5 | |
| | 3.4 | 15.5 | |

An electrode sheet moved in a machine direction is measured. The measurement of the electrode sheet may include scanning the electrode sheet in a transverse direction. Accordingly, a measurement start coordinate and a measurement end coordinate of a scanning may be different from a measurement start coordinate and a measurement end coordinate end of a subsequent scanning. For example, the measurement start coordinate of the scanning is less than the measurement end coordinate of the scanning, the measurement start coordinate of the subsequent scanning is less than the measurement end coordinate of the scanning, and the measurement end coordinate of the scanning is less than the measurement start coordinate of the subsequent scanning. The measurement end coordinate of the scanning is the same as the measurement start coordinate of the subsequent scanning. In contrast, in Table 1, the measurement start coordinate of the first section is the same as the measurement start coordinate of the second section. Such an error may be referred to as duplication of data. Duplication of data may be caused by a problem with the transmission of the compressed measurement data CMD or a problem with the resetting (or updating) of coordinates by the measuring device and the controller 110. In this case, not only the measurement start coordinate of the second section but also the measurement end coordinate of the first section may be unclear.

Next, in P120, the compressed measurement data CMD may be modified. The compressed measurement data CMD may be modified by the server 340 and thus duplication of data of the compressed measurement data CMD may be eliminated. Modified measurement data may be generated by modification of the compressed measurement data CMD. Table 2 below shows modified measurement data.

**[Table 2]**

| | Measurement start coordinate | Measurement end coordinate | Representative value |
|---|---|---|---|
| First section | 3.4 | 15.5 | Y |
| | 3.4 | 15.5 | |
| | 3.4 | 15.5 | |
| | 3.4 | 15.5 | |
| | 3.4 | 15.5 | |
| Second section | 3.4 | 15.5 | Y |
| | 3.4 | 15.5 | |
| | 3.4 | 15.5 | |
| | 3.4 | 15.5 | |
| | 3.4 | 15.5 | |

In Table 1, the first section is included in the second section. When there is a problem with the resetting of coordinates by the measuring device and/or the controller 110, the measurement end coordinate of the first section is unclear, and thus, the representative value 'X' of Table 1 is unavailable because the reliability of calculated measurement start and end coordinates of a part of an electrode sheet is low. In contrast, each of the measurement start and end coordinates of the second section is clear. Accordingly, the second section includes a representative value calculated from the known measurement start and end coordinates. According to example embodiments, the server 340 may replace the measurement start and end coordinates and the representative value of the first section with the measurement start and end coordinates and the representative value of the second section. According to example embodiments, the measurement start and end coordinates and the representative value of the first section may be synchronized with those of the second section to prevent an error due to the duplication of data and improve the reliability of the tracking of a secondary battery.

Next, in P130, the modified measurement data may be stored. The modified measurement data may be stored in the server 340.

### (Third Embodiment: Method)

FIG. 3 is a flowchart of a data joining method according to example embodiments.

Referring to FIGS. 1 and 2, in P210, coordinate-related cell ID data CIDD and compressed measurement data CMD may be joined. The coordinate-related cell ID data CIDD and the compressed measurement data CMD may be joined by the server 340. The server 340 may store the coordinate-related cell ID data CIDD and the compressed measurement data CMD. The server 340 may be configured to join the coordinate-related cell ID data CIDD and the compressed measurement data CMD to generate joined data in response to an API request from a client device. The server 340 may be configured to transmit a uniform resource locator (URL) (or a schema) including a source code for displaying the joined data on the client device to the client device.

Table 3 below shows an inner join of the coordinate-related cell ID data CIDD and the compressed measurement data CMD according to a comparative example, and Table 4 below shows an outer join of the coordinate-related cell ID data CIDD and the compressed measurement data CMD according to examples.

**[Table 3]**

| Coordinate-related cell ID data | | Compressed measurement data | | Joined data | | | |
|---|---|---|---|---|---|---|---|
| Cell ID | Cell ID coordinate | Measurement start coordinate | Measurement end coordinate | Cell ID | Cell ID coordinate | Measurement start coordinate | Measurement end coordinate |
| AA | 0.4 | omitted | omitted | No joined data | | | |
| BB | 0.5 | 0.4 | 3.9 | BB | 0.5 | 0.4 | 3.9 |
| CC | 0.6 | 0.4 | 3.9 | CC | 0.6 | 0.4 | 3.9 |
| DD | 0.7 | omitted | omitted | No joined data | | | |

In Table 3, parts of the coordinate-related measurement data corresponding to the cell IDs 'AA' and 'DD' may be omitted due to a data transmission error or the like. In this case, distortion of the data is caused by the omission of samples, and the omission of part of the compressed measurement data may not be recognized.

**[Table 4]**

| Coordinate-related cell ID data | | Compressed measurement data | | Joined data | | | |
|---|---|---|---|---|---|---|---|
| Cell ID | Cell ID coordinate | Measurement start coordinate | Measurement end coordinate | Cell ID | Cell ID coordinate | Measurement start coordinate | Measurement end coordinate |
| AA | 0.4 | omitted | omitted | AA | 0.4 | - | - |
| BB | 0.5 | 0.4 | 3.9 | BB | 0.5 | 0.4 | 3.9 |
| CC | 0.6 | 0.4 | 3.9 | CC | 0.6 | 0.4 | 3.9 |
| DD | 0.7 | omitted | omitted | DD | 0.7 | - | - |

In Table 4, data of a roll map of an electrode process (e.g., the compressed measurement data CMD and the coordinate-related inspection data CIDD) and the coordinate-related cell ID data CIDD are joined based on the coordinate-related cell ID data CIDD. As a non-limiting example, the joining of the coordinate-related cell ID data CIDD and the compressed measurement data CMD may be a left join. As another example, the joining of the coordinate-related cell ID data CIDD and the compressed measurement data CMD may be a right join. A null value may be input to a data omission part of the joined data. The data omission part of the joined data may be assigned an arbitrary value that includes a special symbol such as '-', '*', '@', or '#' for identification of the omission of data.

Next, in P220, an omitted part of the joined data may be modified. The joined data may be modified by the server 340 to form modified data. Table 5 below shows joined data, and modified data generated by modifying the joined data.

**[Table 5]**

| Joined data | | | | Modified data | | | |
|---|---|---|---|---|---|---|---|
| Cell ID | Cell ID coordinate | Measurement start coordinate | Measurement end coordinate | Cell ID | Cell ID coordinate | Measurement start coordinate | Measurement end coordinate |
| AA | 0.4 | - | - | AA | 0.4 | 0.4 | 3.9 |
| BB | 0.5 | 0.4 | 3.9 | BB | 0.5 | 0.4 | 3.9 |
| CC | 0.6 | 0.4 | 3.9 | CC | 0.6 | 0.4 | 3.9 |
| DD | 0.7 | - | - | DD | 0.7 | 0.4 | 3.9 |

The modification of omitted data of compressed measurement data CMD may include comparing measurement start and end coordinates of a non-omitted part of the compressed measurement data CMD (i.e., a part of the compressed measurement data CMD transmitted normally by the server 340) with cell ID coordinates of the coordinate-related cell ID data CIDD. More specifically, the modification of the joined data includes detecting coordinates, e.g., '0.4' and '0.7' in Table 5, which define a section including cell ID coordinates corresponding to the omitted part of the compressed measurement data CMD among pairs of measurement start and end coordinates.

In Table 5, a cell ID coordinate '0.4' matching cell ID 'AA' and a cell ID coordinate '0.7' matching cell ID 'DD' are included in a section defined by a measurement start coordinate '0.4' and a measurement end coordinate '3.9' that match cell ID 'BB'. Accordingly, in the modified data, the cell ID 'AA' and the cell ID coordinate '0.4' matching thereto may be matched to the measurement start coordinate '0.4', the measurement end coordinate '3.9', and a representative value of the section defined by the measurement start coordinate '0.4' and the measurement end coordinate '3.9'. In addition, in the modified data, the cell ID 'DD' and the cell ID coordinate '0.7' matching thereto may be matched to the measurement start coordinate '0.4', the measurement end coordinate '3.9', and the representative value of the section defined by the measurement start coordinate '0.4' and the measurement end coordinate '3.9'.

The generation of the modified data may be performed in response to a request from a client device or may be automatically performed in response to a request to check the joined data, given from the client device.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map storing method comprising:
transmitting compressed measurement data to a server, the compressed measurement data being generated by processing measurement data collected by measuring an electrode sheet;
modifying the compressed measurement data to generate modified measurement data; and
storing the modified data,
wherein the compressed measurement data includes a first measurement start coordinate, a first measurement end coordinate, a first representative value of a first section defined by the first measurement start coordinate and the first measurement end coordinate, a second measurement start coordinate, a second measurement end coordinate, and a second representative value of a second section defined by the second measurement start coordinate and the second measurement end coordinate, and
the first measurement start coordinate and the second measurement start coordinate are the same.

2. The roll map storing method of claim 1, wherein
the modifying of the compressed measurement data is performed by the server.

3. The roll map storing method of claim 1, wherein
the modifying of the compressed measurement data includes replacing the first measurement end coordinate with the second measurement end coordinate.

4. The roll map storing method of claim 1, wherein
the modifying of the compressed measurement data includes replacing the first representative value with the second representative value.

5. A roll map extracting method comprising joining coordinate-related cell identifier (ID) data and compressed measurement data to extract joined data,
wherein the compressed measurement data includes measurement start coordinates, measurement end coordinates, and representative values of measurement of parts of an electrode sheet defined by the measurement start coordinates and the measurement end coordinates,
the coordinate-related cell ID data includes cell IDs and cell ID coordinates, which are coordinates of electrodes matching the cell IDs, wherein the electrodes are formed by cutting the electrode sheet, and
the coordinate-related cell ID data and the compressed measurement data are joined by an outer join.

6. The roll map extracting method of claim 5, wherein
the outer join includes a left join based on the coordinate-related cell ID data.

7. The roll map extracting method of claim 5, wherein
the outer join includes a right join.

8. The roll map extracting method of claim 5, wherein
the compressed measurement data includes an omitted part, and
in the joined data, the measurement start coordinate and the measurement end coordinate of the omitted part of the compressed measurement data are null.

9. The roll map extracting method of claim 5, further comprising
modifying the joined data to generate modified data,
wherein the modifying of the joined data includes comparing the measurement start coordinates and the measurement end coordinates, which are not null, with the cell ID coordinates of the coordinate-related cell ID data.

10. The roll map extracting method of claim 9, wherein
the modifying of the joined data to generate the modified data includes
detecting a first measurement start coordinate and a first measurement end coordinate that define a first section including a first cell ID coordinate corresponding to an omitted part of the compressed measurement data,
wherein the first cell ID coordinate is included in the cell ID coordinates,
the first measurement start coordinate is included in the measurement start coordinates, and
the first measurement end coordinate is included in the measurement end coordinates.

11. The roll map extracting method of claim 10, wherein
the modifying of the joined data to generate the modified data includes
matching the first measurement start coordinate and the first measurement end coordinate to the first cell ID coordinate.

12. The roll map extracting method of claim 11, wherein
a first representative value of the first section matches the first cell ID coordinate,
wherein the first representative value is included in the representative values of the compressed measurement data.
